Europäisches Patentamt

European Patent Office

Office européen des brevets

(11) Publication number: **0 122 703**
**B1**

(12) **EUROPEAN PATENT SPECIFICATION**

(45) Date of publication of patent specification: **11.04.90**

(51) Int. Cl.⁵: **B 29 C 47/24**

(21) Application number: **84301313.7**

(22) Date of filing: **29.02.84**

(54) Single lip rotary die.

(30) Priority: **11.03.83 US 474630**

(43) Date of publication of application:
**24.10.84 Bulletin 84/43**

(45) Publication of the grant of the patent:
**11.04.90 Bulletin 90/15**

(84) Designated Contracting States:
**BE DE FR GB IT NL**

(56) References cited:
**DE-A-1 930 987**
**DE-A-2 264 020**
**DE-A-2 626 351**
**DE-A-2 915 835**
**US-A-3 966 861**
**US-A-4 368 017**

(73) Proprietor: **MOBIL OIL CORPORATION**
**150 East 42nd Street**
**New York New York 10017 (US)**

(72) Inventor: **Sharps, Gordon Vincent, Jr.**
**272 Ayrault Road**
**Fairport New York 14450 (US)**

(74) Representative: **Cooper, John Anthony et al**
**Mobil Court 3 Clements Inn**
**London WC2A 2EB (GB)**

Courier Press, Leamington Spa, England.

**Description**

The present invention relates to a tubular extrusion die and, more particularly, to a single lip rotary tubular extrusion die and method for making a multi-layer co-extruded plastic film.

It is known that a tubular extruded thermoplastic film has a high degree of molecular orientation in the machine direction (MD) and a relatively low degree of molecular orientation in the transverse direction (TD) (also known as cross direction (CD)), causing an extruded thermoplastic film to have a low mechanical strength in the transverse direction. It is also known that a tubular extruded thermoplastic film can be stretched, as by blown expansion, to improve the molecular orientation, structural integrity and strength properties in the transverse direction. However, the amount of transverse direction orientation which can be imparted to an extruded film by blown expansion is limited by the degree to which the film can be stretched without breaking. In general, it would be desirable to increase the amount of transverse direction orientation of a thermoplastic film prior to expansion to increase its strength in that direction.

U.S. 4368017 discloses apparatus suitable for forming a laminate by coextrusion comprising a circular coextrusion die having an exit slot, separate passage-defining means in said die upstream of said slot for feeding towards the slot at least two separate and distinct concentric tubular layer-form streams of at least one molten polymeric material, means for rotating said separate passages and the streams therein relative to one another in the die and for simultaneously melt stretching each stream substantially in one direction, which intersects with the direction of the other stream, further passage-defining means in said die intermediate each first mentioned passage-defining means for feeding between said two concentric tubular streams and concentric therewith at least one separate generally tubular stream of polymeric material different from each polymeric material of said concentric tubular streams, separate generally annular polymeric material-delivering means for each of said respective polymeric materials arranged in concentric relationship for communication with the respective passage-forming means, means for uniting the streams in a common passage in the die prior to their immergence from the exit slot, and means for solidifying the united stream with their intersecting stretching directions intact, said further passage defining means including two substantially annular branches for generating two separate tubular streams of said different polymeric material, each said branch merging with the adjacent side of a separate one of said first-mentioned separate passage-defining means upstream of said common passage, whereby each of said streams of different polymeric material is joined with one of said first tubular streams to form a composite sandwich-like stream undergoes melt-stretching as a whole combined with rotation relative to the other composition stream.

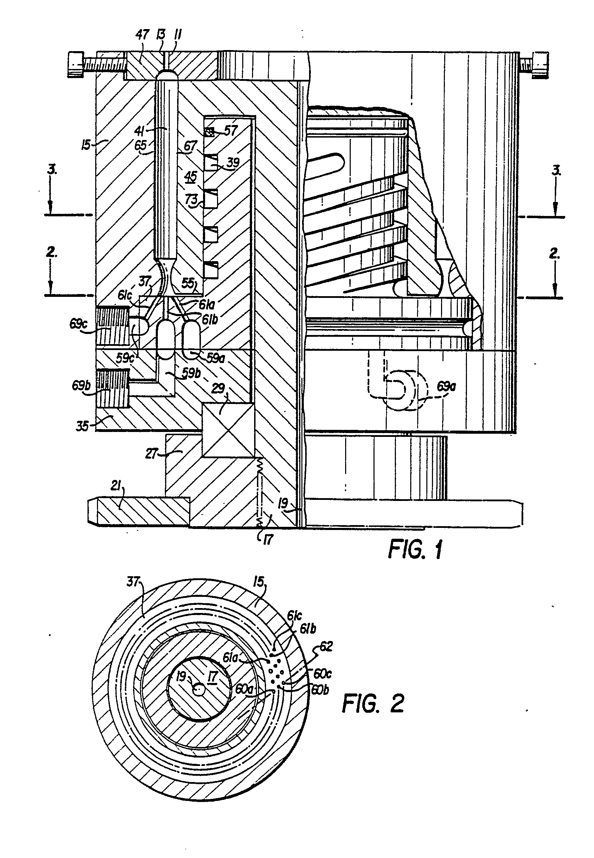

Figures 1 and 2 of U.S. 4368017 show differing die structures which produce different extrusion results. In the embodiment of Fig. 1 ducts are provided for extruding respective melts into a common passage, with each group of ducts being separately rotatable relative to the other. A fibular morphology is thereby produced within the annular flow passage by the rotation of the ducts. The melts exiting the ducts then pass through the stationary walls of the outlet orifice of the die.

In the embodiment of Fig. 2 an entirely different die construction is disclosed. Whereas, in Fig. 1, two groups of ducts are illustrated as revolving one relative to the other with the die walls being fixed, the structure of Fig. 2 illustrates relative rotation of two die walls, with fixed holes and with a plurality of different flow channels being provided between the relatively rotating parts of the die. The die of Fig. 2 is particularly designed to extrude a weakly adhesive layer of polymer B between two outer layers of polymer A and, because of this unique bonding of polymers, a rather complicated die structure having several distinct flow paths is employed in order to maintain the fibular morphology sought. Thus, the embodiment of Fig. 1 seeks to produce a fibular morphology for the extruded materials. Rotating one of the die walls 13 and 14 of Fig. 1 relative to the other using stationary openings would produce an extreme smearing of the extruded melts, thus destroying the fibular morphology which Rasmussen seeks. On the other hand, the embodiment of Fig. 2 is extremely complicated and employs a weakly adhesive layer to minimize any smearing effects so that the fibular morphology is retained.

This invention seeks to provide an extruded film having a more balanced molecular orientation. This invention further seeks to provide a capability to coextrude a multi-layer melt in a manner ensuring uniform layering of the extruded film.

The present invention is directed to a unique die construction which is designed to improve upon and overcome the deficiencies noted above with respect to prior art dies.

In particular, the present application is directed to a tubular extrusion die for producing a tubular extruded film from a plurality of melt streams comprising:

an outer die wall and an inner wall respectively defining outer and inner lips of an annular orifice for the extrusion of a polymer melt film;

an annular flow passage extending axially of the die for supplying a polymer melt to the outlet orifice;

a plurality of annular melt inlet passages for supplying separate streams of a melt to the annular flow passage;

a plurality of groups of annularly arranged holes each group being arranged around the inner wall and interconnecting a respective melt inlet passage with the flow passage; and

means for rotating one of the inner wall and outer die wall relative to the other for imparting transverse molecular orientation of a melt extruded through the outlet orifice and a uniform layering of melt from the melt streams in the extruded film.

The present invention is also directed to a method of forming a tubular extruded film comprising the steps of:

extruding at least one thermoplastic material through a tubular die, the tubular die comprising:

an outer die wall and an inner wall respectively defining outer and inner lips of an annular outlet orifice for the extrusion of a polymer melt film;

an annular flow passage extending axially of the die for supplying a polymer melt to the outlet orifice;

a plurality of annular melt inlet passages for supplying streams of a melt to the annular flow passage;

a plurality of groups of annularly arranged holes each group being arranged around the inner wall and interconnecting a respective melt inlet passage with the flow passage; and

rotating one of the inner wall and outer die wall relative to the other during extrusion of the thermoplastic material to impart a transverse molecular orientation to, and cause a uniform layering of, the thermoplastic material in the extruded film.

Fig. 1 shows a partially cutaway side sectional view of a tubular extrusion die constructed in accordance with the teachings of the invention.

Fig. 2 shows a sectional view of the Fig. 1 die taken along the line 2—2.

Fig. 3 is a partly schematic representation of the Fig. 1 die showing the molecular orientation of a film produced therewith.

Fig. 4 shows one side of a tubular film produced by the die of Fig. 1 and its molecular orientation.

Fig. 5 shows a three layer polymer film produced by the Fig. 1 die.

Fig. 6 shows a perspective view of a portion of a unique three layer polymer film produced by the Fig. 1 die.

The die includes an outer die body 15 having an interior peripheral wall 65 which defines one side of an annular flow passage 41. The other side of annular flow passage 41 is formed by an outer peripheral surface 67 of a rotary wall 45. The annular flow passage 41 terminates at a die orifice formed by an inner die lip 11 and an outer die lip 13 respectively provided at the rotary wall 45 and outer die body 15.

A thermoplastic polymer melt is introduced into the annular flow passage 41 by a plurality of annular melt inlet passages 59a, 59b and 59c. These annular melt inlet passages are formed in a distribution plate 35 and a melt seal/distribution block 37 and are respectively connected to melt inlet orifices 69a, 69b and 69c.

The polymer melt flows into the annular flow passage 41 from the annular melt inlet passages 59a, 59b and 59c through respective groups of holes 61a, 61b and 61c provided in the melt seal/distribution block 37. These holes, which have openings into annular flow passage 41 equally spaced in each group, are shown in greater detail in Fig. 2. Each group of holes is on a fixed common radius from the die axis. The different groups of holes 61a, 61b and 61c are each on a different radius, as shown in Fig. 2. In addition, the holes of one group are shifted, in a circumferential direction (radially offset) relative to the holes of another group, so that respective holes 60a, 60b and 60c from all three groups align on line 62, as illustrated in Fig. 2.

The arrangement of the groups 61a, 61b and 61c of holes in the melt distribution block 37 causes polymer melts respectively introduced at inlet orifices 69a, 69b and 69c to be layered in the annular flow passage 41 to thus form a layered co-extrusion of the melts. The manner in which this layering is achieved, and the manner in which it is affected by die rotation, will be described in greater detail below.

Distribution plate 35 includes a bearing 29 which provides thrust support and radial location of a rotary wall input shaft 17.

The die further includes the rotary wall input shaft 17 in which is formed a gas passage 19 which extends throughout the entire axial length of the die. Gas passage 19 is used to blow and expand an extruded polymer film and is well known in the art.

A sprocket 21 is attached to the rotary wall input shaft 17 so that the former drives the latter in rotation. A suitable driving source (not shown) is coupled to sprocket 21 by means of a driving chain.

A bearing retainer 27 is provided which supports both the bearing 29 and the sprocket 21. Driving movement of shaft 17 by rotation of sprocket 21 in turn causes rotation of rotary wall 45.

The stationary melt seal/distribution block 37 which surrounds shaft 17 is connected with the distribution plate 35. The melt seal/distribution block 37 has a cylindrical upper portion which has on its outer circumferential periphery a screw thread 39 forming flight channels of an extruder-type seal. The other part of the extruder type seal is formed by the inner peripheral surface 73 of the rotary wall 45. The screw threads 39 and wall 73 are arranged such that rotation of rotary wall 45 by shaft 17 causes an extruder effect which forces any polymer melt tending to escape from the annular flow passage 41 through a gap 55 existing between the bottom of rotary wall 45 and top of melt seal/distribution block 37 back into the annular flow passage 41. The extruder-type seal is highly effective in preventing loss of polymer melt even when it is under considerably high pressure.

A die orifice adjustment ring 47 is provided which is fixed to the outer die body 15 and is adjustable in position to properly set the width existing between the inner die lip 11 and outer die lip 13 about the entire die orifice.

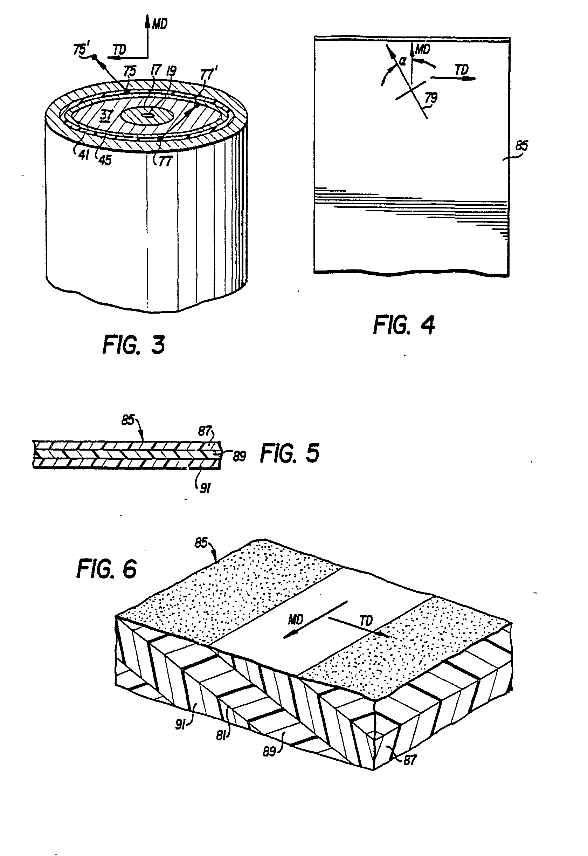

As noted, the holes which are provided in the melt seal/distribution block 37 open into the annular flow passage 41 in the manner illustrated in Fig. 2. Each group of holes is respectively fed from one of the annular melt inlet passages 59a, 59b and 59c which are connected to respective melt inlet orifices 69a, 69b or 69c. As a result, different polymer streams respectively emanate from each of the groups of holes 61a, 61b and 61c. This causes a layering of the polymer streams in the annular flow passage 41. If the Fig. 1 die is used as a straight tubular flow through die, without rotation of wall 45, the polymer streams which are combined in the annular flow passage 41 will cause an overlapping stripped polymer stream pattern in the extruded polymer film, as shown in Fig. 6. The weld line 81, or line of material juncture caused by the holes 61a, 61b, 61c, is not perpendicular to the film surface as is normally the case, but forms a long diagonal line through the thickness of film 85. That is, the stripped layers 87, 89, 91 are oriented obliquely with respect to the inner and outer surfaces of the film wall. In this way the weld line is as strong as the surrounding material, showing no tear propensity.

If rotation is imparted to rotary wall 45, the respective polymer streams will be uniformly distributed in flow passage 41 circumferentially of the die, but will form individual layers 87, 89, 91 within annular flow passage 41, which appear in the extruded film 85, as shown in Fig. 5. As a result, an extruded polymer film is produced having a number of layers of uniformly distributed melt corresponding to the number of melt streams introduced into annular flow passage 41. In the die illustrated in Fig. 1, three such flow streams will be present. However, it should be appreciated by those skilled in the art that the number of flow streams (hole groups and annular flow paths) may be reduced or increased depending on the layering effect desired in the extruded film.

It is found that even a moderate degree of rotation of rotary wall input shaft 17, such as approximately 2 RPM, is sufficient to produce the uniform layering of the polymer streams in the extruded film shown in Fig. 5.

Because a uniform layering of the melt streams is produced upon rotation of the rotary wall 45, the layer ratios or thickness of the extruded polymer streams can be controlled solely by the flow rates of the polymer streams through the melt inlet orifices 69a, 69b and 69c. Additional, complex, internal die structures are not required to regulate layer thickness or distribute a melt circumferentially.

The melt pressure in gap 55 which serves to load bearing 29 also has a tendency to cause melt to be squeezed out of the die and into the space between the stationary support member 49 and the inner periphery surface 73 of rotay wall 45. If high melt pressures are involved, this would be a difficult leakage path to seal. To seal this path, the present invention employs the extruder-type seal with the screw threads 39 provided on the outer peripheral surface of melt seal/distribution block 37 cooperating with the rotating inner peripheral surface 73 of the rotary wall 45. The inner peripheral surface, in effect, acts as the barrel of an extruder during rotation forcing any melt in the area between the stationary block 37 and movable wall 45 back through gap 55 and toward the annular flow passage 41. A seal 57 may be employed to prevent the passage of melt beyond the extrusion type seal only at times of no rotation. That is, when the extruder type seal is not effective.

In addition to its ability to uniformly distribute a plurality of melt streams, the die as illustrated in Fig. 1 has several other unique characteristics associated with rotation of wall 45, one of which is the ability to impart a transverse direction (TD) orientation of the polymer molecules during the extrusion process, thus improving the TD/MD orientation balance of the extruded product. When rotation is employed, the extruded film has improved TD/MD orientation balance, thereby reducing the required blow up ratio (BUR) to attain a particular desired transverse molecular orientation. The Fig. 1 die is particularly useful in extruding a high molecular weight material, such as high density high molecular weight polyethylene, as a desired MD/TD molecular orientation balance can be attained without employing a high stalk extrusion process.

Fig. 3 is a schematic representation of a portion of the annular flow passage 41 of the Fig. 1 die along the line 3—3. Fig. 3 illustrates what happens to a polymer melt in the die during extrusion and upon rotation of the movable wall 45. A particular point in the extruded film shown as 75 in Fig. 3 during extrusion will move not only in a machine direction, but will also move in a circumferential direction of the die to a point illustrated as 75′. Likewise, a point 77, on an opposite side of the extruded film, will move during extrusion to a point illustrated as 77′. This directional movement causes a transverse direction molecular orientation in the extruded film. Fig. 4 illustrates the extruded tubular film 85 and shows the directional molecular orientation imparted to a wall thereof. Strength tests conducted on films produced with the Fig. 1 die with wall 45 rotating illustrate how a more balanced MD/TD orientation in the walls of an extruded film is achieved. In these tests a single thermoplastic resin, either a low density polyethylene (LDPE) or a high density high molecular weight polyethylene (HDHMWPE), was extruded through annular flow passage 41 with varying rates of rotation of wall 45. A standard (non-high stalk) extrusion was employed. For the LDPE the melt temperature was 204°C (400°F), the melt was extruded at the rate of 58.97 kg/hr (130 lb/hr) and a blow-up ratio of 2.2 was employed. For the HDHMWPE the melt temperature was 249°C (480°F), the melt was extruded at the rate of 83.91 kg/hr (185 lb/hr) and a blow-up ratio of 3.1 was employed. The tests for the respective resins are summarized in the Table below.

EP 0 122 703 B1

TABLE

| Material | Sample # | Rotation rpm | MD strength | | | | TD strength | | | |
|---|---|---|---|---|---|---|---|---|---|---|
| | | | Gauge μm/mils | Max KPA at break | Elong. % at break | Elemendorf tear gm/mil | Gauge μm/mils | Max KPA at break | Elong. % at break | Elemendorf tear gm/mil |
| LPDE | A | 0 | 38.4/1.51 | 22587 | 264 | No data | 38.4/1.51 | 15775 | 656 | No data |
| | B | 5 | 41.4/1.62 | 20381 | 269 | | 40.4/1.59 | 17168 | 616 | |
| | C | 10 | 41.7/1.64 | 19822 | 368 | | 40.9/1.61 | 18250 | 595 | |
| | D | 15 | 40.6/1.60 | 18836 | 401 | | 43.7/1.72 | 17623 | 571 | |
| | E | 20 | 43.7/1.72 | 17864 | 474 | | 45.0/1.77 | 16857 | 510 | |
| HDHMWPE | A | 2.5 | 23.4/.92 | 58530 | 491 | 11.3 | 23.9/.94 | 28331 | 715 | 740 |
| | B | 5 | 23.1/.91 | 55262 | 480 | 13.4 | 22.9/.90 | 34653 | 788 | 633 |
| | C | 7.5 | 22.6/.89 | 59095 | 552 | 19.7 | 23.6/.93 | 35432 | 795 | 626 |
| | D | 10 | 23.9/.94 | 48891 | 525 | 20.8 | 24.6/.97 | 36715 | 819 | 367 |
| | E | 15 | 24.1/.95 | 46478 | 497 | 24.8 | 24.4/.96 | 35480 | 667 | 235 |
| | F | 17.5 | 24.6/.97 | 47484 | 533 | 29.1 | 24.9/.98 | 34874 | 683 | 147 |
| | G | 5 | 17.0/.67 | 65755 | 428 | 11.6 | 16.5/.65 | 31661 | 680 | 644 |
| | H | 10 | 17.0/.67 | 61515 | 445 | 14.9 | 17.5/.69 | 29330 | 553 | 656 |
| | I | 15 | 19.0/.75 | 50801 | 433 | 21.5 | 19.0/.75 | 31082 | 606 | 408 |

# EP 0 122 703 B1

As illustrated in the above table, as the rate of rotation of rotary wall 45 increases, the strength properties of the extruded film in the MD and TD directions converge toward one another (the MD strength decreasing, the TD strength increasing) so that a greater degree of MD/TD molecular balance is achieved in the extruded film. As also shown, a near balance of MD/TD molecular orientation can be achieved with high rate of rotation.

When different polymer melt streams are introduced into the Fig. 1 die, the rotary movement of movable wall 45 causes a uniform distribution of the various melt streams in the extruded product without requiring any particular internal die structures to induce pressure drops to ensure uniform melt distribution. Thus, the melt streams can flow through the die with reduced melt pressure. Moreover, since the die illustrated in Fig. 1 does not use particular internal structures to induce pressure drops, it can be used with many different types of polymer melts having different flow characteristics without difficulty.

The Fig. 1 die can also be used to construct speciality type extruded films. For example, if the movable wall 45 is not rotated during extrusion, the stripped effects in the wall of the extruded film shown in Fig. 6 can be obtained.

The extrusion type seal ensures that even with very high extrusion pressures, there will be no leakage of the melt from the die, thus allowing high extrusion pressures to be used.

The die of the invention may be used to extrude many different thermoplastic materials including polyethylene, polypropylene, polystyrene and others.

## Claims

1. A tubular extrusion die for producing a tubular extruded film from a plurality of melt streams comprising:
an outer die wall (15) and an inner wall (45) respectively defining outer (13) and inner (11) lips of an annular outlet orifice for the extrusion of a polymer melt film;
an annular flow passage (41) extending axially of the die for supplying a polymer melt to the outlet orifice;
a plurality of annular melt inlet passages (59a, 59b, 59c) for supplying separate streams of a melt to the annular flow passage;
a plurality of groups of annularly arranged holes (61a, 61b, 61c) each group being arranged around the inner wall and interconnecting a respective melt inlet passage (59a, 59b, 59c) with the flow passage (41); and
means for rotating one of the inner wall (45) and outer die wall (15) relative to the other imparting transverse molecular orientation of a melt extruded through the outlet orifice and a uniform layering of melt from the melt streams in the extruded film.

2. A tubular die as in claim 1, wherein openings into the annular flow passage for one of the groups of holes (61a, 61b, 61c) are arranged on a first common radius from a center of the die and openings into the annular flow passage (41) for at least one of the other groups of holes are arranged on a second common radius from the center of the die which is different from the first common radius.

3. A tubular die as in claim 2, further comprising respective melt inlets (69a, 69b, 69c) connected to each of the annular melt inlet passages (59a, 59b, 59c).

4. A tubular die as in claim 2, wherein the openings into the annular flow passage (41) of one group of holes (61a) is shifted circumferentially and radially offset relative to the openings into the annular flow passage (41) of another group of holes (61b).

5. A tubular die as in claim 2, wherein the openings of the holes into the annular flow passage (51) of each group of holes (61a, 61b, 61c) are equally spaced.

6. A tubular extrusion die as in claim 2, wherein three annular melt inlet passages (59a, 59b, 59c) are provided and three groups of holes (61a, 61b, 61c) are provided, each group of holes interconnecting a respective annular melt inlet passage with the annular flow passage, and the openings for each group of holes into the annular flow passage are arranged on a different common radius from the center of the die.

7. A tubular extrusion as in claim 1, further comprising a stationary cylindrical inner support member (37) extending axially of the dies, at least one extruder flight channel (39) on the outer circumference of the cylindrical support member, the rotary wall (45) defining one side of the annular flow passage (41), the opposite side (73) of the rotary wall (45) from the annular flow passage (41) surrounding the cylindrical support member (37) to form, with the extruder flight channel (39), an extruder seal for forcing melt entering into a space (55) between the cylindrical support member (37) and rotary wall (45) from the annular flow passage (41) back into the annular flow passage.

8. A tubular extrusion die as in claim 7, further comprising a central shaft (17) connected to the rotary wall (45) and means (21) for rotating the shaft (17), the stationary member (37) surrounding the shaft.

9. A method of forming a tubular extruded film comprising the steps of:
extruding at least one thermoplastic material through a tubular die, the tubular die comprising:
an outer die wall (15) and an inner wall (45) respectively defining outer (13) and inner (11) lips of an annular outlet orifice for the extrusion of a polymer melt film;
an annular flow passage (41) extending axially of the die for supplying a polymer melt to the outlet orifice;

6

a plurality of annular melt inlet passages (59a, 59b, 59c) for supplying separate streams of a melt to the annular flow passage (41);

a plurality of groups of annularly arranged holes (61a, 61b, 61c) each group being arranged around the inner wall and interconnecting a respective melt inlet passage (59a, 59b, 59c) with the flow passage (41); and

rotating one of the inner wall (45) and outer die wall (15) relative to the other during extrusion of the thermoplastic material to impart a transverse molecular orientation to, and cause a uniform layering of, the thermoplastic material in the extruded film.

10. A method as in claim 9, wherein the thermoplastic material is a high molecular weight high density polyethylene.

11. A method as in claim 9, wherein the openings into the annular flow passage (41) for one of the groups of holes (61a, 61b, 61c) are arranged on a first common radius from the center of a die and the openings into the annular flow passage (41) for at least one of the other groups of holes (61a, 61b, 61c) are arranged on a second common radius from the center of the die which is different from the first common radius, the openings of the one group of holes into the annular flow passage being circumferentially shifted and radially offset from those of another group of holes.

12. A method as in claim 9, wherein the thermoplastic material is formed into stripped layers by the hole openings with weld lines of adjacent layers of the thermoplastic material being obliquely oriented with respect to the inner and outer surfaces of the extruded film.

13. A tubular extruded film comprising a plurality of layers of thermoplastic material forming a film wall having inner and outer surfaces, the plurality of thermoplastic material layers each having a substantially uniform thickness and extending at an oblique angle from one other surface of the wall to an opposite inner wall surface to form a stripped pattern of layers around the circumference of the film, the weld line between adjacent thermoplastic material layers having an orientation which oblique with respect to the outer and inner surfaces of the wall.

**Patentansprüche**

1. Röhrenförmige Extrusionsdüse zur Herstellung eines röhrenförmigen extrudierten Films aus einer Mehrzahl von Schmelzströmen, mit

einer äußeren Düsenwand (15) und einer inneren Wand (45), die eine äußere (13) bzw. eine innere (11) Lippe einer ringförmigen Auslaßöffnung zur Extrusion eines Polymerschmelzfilms bilden,

einem rinförmigen Durchflußkanal (41), der sich axial zu der Düse erstreckt, zum Zuführen einer Polymerschmelze zu der Auslaßöffnung,

einer Mehrzahl von ringförmigen Schmelzeinlaßkanälen (59a, 59b, 59c) zur Zuführung getrennter Ströme einer Schmelze. zu dem ringförmigen Durchflußkanal,

einer Mehrzahl von Gruppen von ringförmig angeordneten Löchern (61a, 61b, 61c), wobei jede Gruppe um die innere Wand herum angeordnet ist und einen entsprechenden Schmelzeinlaßkanal (59a, 59b, 59c) mit dem Durchflußkanal (41) verbindet, und

einer Vorrichtung zum Drehen der inneren Wand (45) oder der äußeren Düsenwand (15) relativ zur jeweils anderen, wodurch sich eine quer verlaufende molekulare Ausrichtung einer durch die Auslaßöffnung extrudierten Schmelze und eine einheitliche Schichtung der Schmelze aus den Schmelzströmen in dem extrudierten Film ergibt.

2. Röhrenförmige Düse nach Anspruch 1, worin für eine der Gruppen von Löchern (61a, 61b, 61c) auf einem ersten gemeinsamen Radius von einem Mittelpunkt der Düse aus Öffnungen in den ringförmigen Durchflußkanal hinein angeordnet sind und für wenigstens eine der anderen Gruppen von Löchern auf einem vom ersten Radius verschiedenen zweiten gemeinsamen Radius vom Mittelpunkt der Düse aus Öffnungen in den ringförmigen Durchflußkanal (41) hinein vorgesehen sind.

3. Röhrenförmige Düse nach Anspruch 2, die weiterhin entsprechende Schmelzeinlaßöffnungen (69a, 69b, 69c) aufweist, die mit jedem der ringförmigen Schmelzeinlaßkanäle (59a, 59b, 59c) verbunden sind.

4. Röhrenförmige Düse nach Anspruch 2, worin die Öffnungen einer Gruppe von Löchern (61a) in den ringförmigen Durchflußkanal (41) hinein im Verhältnis zu den Öffnungen einer anderen Gruppe von Löchern (61b) in den ringförmigen Durchflußkanal (41) hinein im Umfang verschoben und radial versetzt sind.

5. Röhrenförmige Düse nach Anspruch 2, worin die Öffnungen der Löcher in den ringförmigen Druchflußkanal (41) hinein von jeder Gruppe von Löchern (61a, 61b, 61c) den gleichen Abstand aufweisen.

6. Röhrenförmige Extrusionsdüse nach Anspruch 2, die mit drei ringförmigen Schmelzeinlaßkanälen (59a, 59b, 59c) und drei Gruppen von Löchern (61a, 61b, 61c) versehen ist, wobei jede Gruppe von Löchern einen entsprechenden ringförmigen Schmelzeinlaßkanal mit dem ringförmigen Durchflußkanal verbindet und die Öffnungen für jede Gruppe von Löchern in den ringförmigen Durchflußkanal hinein auf einem verschiedenen gemeinsamen Radius vom Mittelpunkt der Düse aus angeordnet sind.

7. Röhrenförmige Extrusionsdüse nach Anspruch 1, mit weiterhin einem axial zu den Düsen sich erstreckenden stationären zylindrischen inneren Stützelement (37) und wenigstens einem Extruderschraubengang (39) auf dem äußeren Umfang des zylindrischen Stützelements, wobei die sich drehende Wand (45) eine Seite des ringförmigen Durchflußkanals bildet und die bezüglich des

7

ringförmigen Durchflußkanals (41) gegenüberliegende Seite (73) der sich drehenden Wand (45), die das zylindrische Stützelement (37) umgibt, mit dem Extruderschraubengang (39) eine Extruderdichtung bildet, um Schmelze, die in den Raum (55) zwischen dem zylindrischen Stützelement (37) und der sich drehenden Wand (45) aus dem ringförmigen Durchflußkanal (41) eintritt, in den ringförmigen Schmelzkanal zurückzutreiben.

8. Röhrenförmige Extrusionsform nach Anspruch 7, die weiterhin eine zentrale Welle (17) aufweist, die mit der sich drehenden Wand (45) und einer Vorrichtung (21) zum Drehen der Welle (17) verbunden ist, wobei das stationäre Element (37) die Welle umgibt.

9. Verfahren zum Formen eines röhrenförmig extrudierten Filmes mit folgenden Schritten:

Extrudieren wenigstens eines thermoplastischen Materials durch eine röhrenförmige Düse, die eine äußere Düsenwand (15) und eine innere Wand (45), die eine äußere (13) bzw. innere (11) Lippe einer ringförmigen Auslaßöffnung zur Extrusion eines Polymerschmelzfilms bilden,

einen ringförmigen Durchflußkanal (41), der sich axial zu der Düse erstreckt, zum Zuführen einer Polymerschmelze zu der Auslaßöffnung,

eine Mehrzahl von ringförmigen Schmelzeinlaßkanälen (59a, 59b, 59c) zur Zuführung getrennter Ströme einer Schmelze zu dem ringförmigen Durchflußkanal (41), und

eine Mehrzahl von Gruppen von ringförmig angeordneten Löchern (61a, 61b, 61c), wobei jede Gruppe um die innere Wand herum angeordnet ist und einen entsprechenden Schmelzeinlaßkanal (59a, 59b, 59c) mit dem Durchflußkanal (41) verbindet, umfaßt, und

Drehen der inneren Wand (45) oder der äußeren Düsenwand (15) relativ zur jeweils anderen während der Extrusion des thermoplastischen Materials, um dem thermoplastischen Material in dem extrudierten Film eine quer verlaufende molekulare Ausrichtung zu verleihen und eine einheitliche Schichtung in ihm zu bewirken.

10. Verfahren nach Anspruch 9, worin das thermoplastische Material ein Polyethylen mit hohem Molekulargewicht und hoher Dichte ist.

11. Verfahren nach Anspruch 9, worin die Öffnungen in den ringförmigen Durchflußkanal (41) hinein für eine der Gruppen von Löchern (61a, 61b, 61c) auf einem ersten gemeinsamen Radius vom Mittelpunkt einer Düse aus angeordnet sind und die Öffnungen in den Durchflußkanal (41) hinein für wenigstens eine andere Gruppe von Löchern (61a, 61b, 61c) auf einem vom ersten Radius verschiedenen zweiten gemeinsamen Radius angeordnet sind, wobei die Öffnungen der einen Gruppe von Löchern in den ringförmigen Durchflußkanal hinein von denen einer anderen Gruppe von Löchern im Umfang verschoben und radial versetzt sind.

12. Verfahren nach Anspruch 9, worin das thermoplastische Material durch die Lochöffnungen zu streifenförmigen Schichten geformt wird, die Schweißlinien zwischen benachbarten Schichten des thermoplastischen Materials aufweisen, das in bezug auf die innere und die äußere Oberfläche des extrudierten Films schräg ausgerichtet ist.

13. Röhrenförmiger extrudierter Film mit einer Mehrzahl von Schichten aus thermoplastischen Material, das eine Filmwand mit einer inneren und einer äußeren Oberfläche aufweist, wobei jede der Schichten aus thermoplastischem Material eine im wesentlichen gleichförmige Dicke aufweist und sich in einem schiefen Winkel von einer anderen Oberfläche der Wand zu einer gegenüberliegenden inneren Wandoberfläche erstreckt, um ein streifenförmiges Muster von Schichten um den Umfang des Films herum zu bilden, wobei die Schweißlinie zwischen benachbarten Schichten aus thermoplastischem Material eine Ausrichtung aufweist, die in bezug auf die innere und die äußere Oberfläche der Wand schräg verläuft.

## Revendications

1. Une filière d'extrusion tubulaire destinée à fabriquer un film tubulaire extrudé à partir d'une pluralité de courants de produits en fusion comprenant:

— une paroi extérieure de filière (15) et une paroi intérieure (45) définissant respectivement les lèvres extérieure (13) et intérieure (11) d'un orifice de sortie annulaire pour l'extrusion d'un film de polymère fondu;

— un passage d'écoulement annulaire (41) s'étendant axialement sur la filière pour fournir du polymère fondu à l'orifice de sortie;

— une pluralité de passages d'entrée annulaires de produits en fusion (59a, 59b, 59c) pour fournir des courants séparés d'un produit en fusion au passage d'écoulement annulaire;

— une pluralité de groupes de trous disposés annulairement (61a, 61b, 61c), chaque groupe étant disposé autour de la paroi intérieure et reliant un passage d'entrée respectif de produits en fusion (59a, 59b, 59c) au passage d'écoulement (41); et

— des moyens pour entraîner en rotation l'une par rapport à l'autre la paroi intérieure (45) et la paroi extérieure de filière (15) pour provoquer une orientation moléculaire transversale d'un produit en fusion extrudé à travers l'orifice de sortie et une stratification ou mise en couches uniforme du produit en fusion à partir des courants de produits en fusion dans le film extrudé.

2. Une filière tubulaire selon la revendication 1, dans laquelle des ouverture dans le passage d'écoulement annulaire pour l'un des groupes de trous (61a, 61b, 61c) sont disposées sur un premier rayon commun à partir du centre de la filière et des ouvertures dans le passage d'écoulement annulaire (41) pour au moins l'un des autres groupes de trous sont disposées sur un second rayon commun à partir du centre de la filière qui est différent du premier rayon commun.

3. Une filière tubulaire selon la revendication 2, comportant en outre des entrées respectives de produits en fusion (69a, 69b, 69c) reliées à chacun des passages annulaires d'entrée de produits en fusion (59a, 59b, 59c).

4. Une filière tubulaire selon la revendication 2, dans laquelle les ouvertures dans le passage d'écoulement annulaire (41) d'un groupe de trous (61a) sont décalées circonférentiellement et déplacées radialement par rapport aux ouvertures dans le passage d'écoulement annulaire (41) d'un autre groupe de trous (61b).

5. Une filière tubulaire selon la revendication 2, dans laquelle les ouvertures des trous dans le passage d'écoulement annulaire (51) de chacun des groupes de trous (61a, 61b, 61c) sont régulièrement espacées.

6. Une filière d'extrusion tubulaire selon la revendication 2, dans laquelle trois passages annulaires d'entrée de produits en fusion (59a, 59b, 59c) sont prévus et trois groupes de trous (61a, 61b, 61c) sont prévus, chaque groupe de trous reliant un passage annulaire respectif d'entrée de produits en fusion au passage annulaire d'entrée, et les ouvertures de chacun des groupes de trous dans le passage annulaire d'écoulement étant disposées sur un rayon commun différent à partir du centre de la filière.

7. Une extrusion tubulaire selon la revendication 1, comprenant en outre un organe intérieur cylindrique de support fixe (37) s'étendant axialement par rapport aux filières, au moins un canal de volée d'extrudeuse (39) sur la circonférence extérieure de l'organe de support cylindrique, la paroi rotative (45) définissant une face du passage d'écoulement annulaire (41), la face opposée (73) de la paroi rotative (45) à partir du passage d'écoulement annulaire (41) entourant l'organe de support cylindrique (37) pour former avec le canal de volée d'extrudeuse (39), un joint d'étanchéité d'extrudeuse forçant le produit en fusion à pénétrer dans un espace (55) entre l'organe de support cylindrique (37) et la paroi rotative (45) à partir du passage d'écoulement annulaire (41) pour refluer dans le passage d'écoulement annulaire.

8. Une filière d'extrusion tubulaire selon la revendication 7, comprenant en outre un arbre central (17) relié à la paroi rotative (45) et des moyens (21) pour entraîner en rotation l'arbre (17), l'organe fixe (37) entourant l'arbre.

9. Un procédé pour former un film tubulaire extrudé comprenant les étapes consistant à:
— extruder au moins un matériau thermoplastique à travers une filière tubulaire qui comprend:
— une paroi extérieure de filière (15) et une paroi intérieure (45) définissant respectivement les lèvres extérieure (13) et intérieure (11) d'un orifice de sortie annulaire pour l'extrusion d'un film polymère fondu;
— un passage d'écoulement annulaire (41) s'étendant axialement par rapport à la filière pour fournir un polymère fondu à l'orifice de sortie;
— une pluralité de passage annulaires d'entrée de produits en fusion (59a, 59b, 59c) pour fournir des courants séparés d'un produit de fusion au passage d'écoulement annulaire;
— une pluralité de groupes de trous disposés annulairement (61a, 61b, 62c), chaque groupe étant disposé autour de la paroi intérieure et reliant un passage respectif d'entrée de produits de fusion (59a, 59b, 59c) au passage d'écoulement (41); et
— faire tourner l'une par rapport à l'autre la paroi intérieure (45) et la paroi extérieure de filière (15) au cours de l'extrusion du matériau thermoplastique pour provoquer une orientation moléculaire transversale du matériau thermoplastique et provoquer sa stratification ou mise en couches uniforme dans le film extrudé.

10. Un procédé selon la revendication 9, dans lequel le matériau thermoplastique est un polyéthylène haute densité à poids moléculaire élevé.

11. Un procédé selon la revendication 9, dans lequel les overtures dans le passage d'écoulement annulaire (41) pour l'un des groupes de trous (61a, 61b, 61c) sont disposées sur un premier rayon commun à partir du centre d'une filière et les ouvertures dans le passage d'écoulement annulaire (41) pour au moins l'un des autres groupes de trous (61a, 61b, 61c) sont disposées sur un second rayon commun à partir du centre de la filière qui est différent du premier rayon commun, les ouvertures de l'un des groupes de trous dans le passage d'écoulement annulaire étant décalées circonférentiellement et déplacées radialement par rapport à celles de l'autre groupe de trous.

12. Un procédé selon la revendication 9, dans lequel le matériau thermoplastique est formé en couches en bandes par les ouvertures de trous avec des lignes de soudure des couches adjacentes du matériau thermoplastique qui sont orientées obliquement par rapport aux surfaces intérieure et extérieure du film extrudé.

13. Un film tubulaire extrudé comprenant une pluralité de couches de matériau thermoplastique formant une paroi de film présentant des surfaces extérieure et intérieure, la pluralité de couches de matériau thermoplastique présentant chacune une épaisseur sensiblement uniforme et s'étendant sur un angle oblique à partir de l'une des surfaces de la paroi jusqu'à une surface de paroi intérieure opposée pour former un réseau de couches en bandes autour de la circonférence du film, la ligne de soudure entre les couches de matériau thermoplastique adjacentes présentant une orientation oblique par rapport aux surfaces extérieure et intérieure de la paroi.

FIG. 1

FIG. 2

1

FIG. 3

FIG. 4

FIG. 5

FIG. 6